# EUROPEAN PATENT SPECIFICATION

(11) **EP 2 431 905 B1**
(45) Date of publication and mention of the grant of the patent: **06.03.2019**
(21) Application number: 11180009.0
(22) Date of filing: 05.09.2011
(51) Int. Cl.: G06F 21/60, G06F 21/30, G06F 3/12, H04N 1/00

(54) **IMAGE INFORMATION PROCESSING APPARATUS, IMAGE INFORMATION PROCESSING SYSTEM, AND COMPUTER-READABLE STORAGE MEDIUM FOR COMPUTER PROGRAM**
BILDINFORMATIONSVERARBEITUNGSVORRICHTUNG, BILDINFORMATIONSVERARBEITUNGSSYSTEM UND COMPUTERLESBARES SPEICHERMEDIUM FÜR EIN COMPUTERPROGRAMM
APPAREIL DE TRAITEMENT D'INFORMATIONS D'IMAGE, PROCÉDÉ DE TRAITEMENT D'INFORMATIONS D'IMAGE, ET SUPPORT DE STOCKAGE LISIBLE SUR ORDINATEUR POUR PROGRAMME INFORMATIQUE

(30) Priority: 17.09.2010 JP 2010208690
(43) Date of publication of application: 21.03.2012
(73) Proprietor: Konica Minolta Business Technologies, Inc., Chiyoda-ku Tokyo 100-0005 (JP)
(72) Inventor: Fujii, Masato, Tokyo, 100-0005 (JP)
(74) Representative: Hoffmann Eitle

(56) References cited:
- GB-A- 2 418 761
- US-A1- 2009 091 791
- US-A1- 2010 231 950

## Description

The present invention relates to an image information processing apparatus having an operating panel on which operating screens can be displayed. Such an image information processing apparatus is capable of one or more of the following image-information-related processes: printing, scanning, copying, facsimile transmission/reception, and data save (storage). An example of the image information processing apparatus is a Multi-Functional Peripheral (MFP).

In US 2009/0091791 A1, there is described a third-party administrative control of remote imaging jobs and related imaging devices. Here, administrative controls may be used in conjunction with the remote user interface features to restrict access to the imaging device by remote user devices, by remote user interface applications, and/or walkup users. A server may provide a discovery process for imaging devices coupled thereto and may maintain a central repository for device capabilities information. The server may further emulate remote user interface capabilities for those imaging devices that do not directly support such features. A monitor process may be spawned to monitor status of the imaging device and jobs thereon and to control the state of job processing on the imaging device.

Further, MFP's (also called multifunction devices) used for a variety of purposes such as copying are one of OA machines that are indispensable in offices of business. One or more MFP's are installed in business offices depending on the size of the business offices. Such MFP's are usually shared by a plurality of users irrespective of how many MFP's are installed in the business office. Supposing that an MFP is shared by a plurality of users, the MFP is equipped with an authentication function for identifying users, a job management function, and other functions.

The operating panel of an MFP has a display configured to display many operating screens. Such a display typically has a size of approximately 8 inches on the diagonal (resolution level of 480 x 200 dots), and is capable of making such a sharp preview that a user can understand the details of image information displayed on the screen. The image information is information realized based on visual elements, e.g., text, charts, and photos. The user appropriately operates operation buttons in operating screens displayed on the operating panel, so that he/she can select a desired function from among many functions of the MFP, and make settings on operation relating to the selected function.

In order to improve the usability of MFPs, a conventional art has been proposed in which a mobile phone possessed by a user is used to operate an MFP (Japanese Laid-open Patent Publication No. 2008-053834). According to the conventional art, an MFP sends, in advance, application software to a registered mobile terminal (mobile phone). The application software is to be used by a user if an error occurs in the MFP during job execution. If an error occurs in the MFP thereafter, the MFP informs the mobile terminal that the error occurs, and operates in accordance with user's operation through the mobile terminal. According to the conventional art, even if a user (client) of the MFP operates a client terminal (e.g., a personal computer) connected to the MFP via a network to instruct the MFP to execute a job, and leaves the installation location of the client terminal, he/she can deal with an error immediately after knowing occurrence of the error.

Mobile information terminals having touch input capability such as smartphones or tablet computers may be used to operate an image information processing apparatus. A variety of applications can be installed onto such mobile information terminals. Installing operating programs onto mobile information terminals realizes an environment in which users can perform operation at hand in a manner similar to operation performed on an operating panel of an image information processing apparatus.

However, if operating programs are installed unconditionally onto all of mobile information terminals having a capability to operate an image information processing apparatus, information-security-related problems occur. Stated differently, providing a mobile information terminal with operation functions similar to those of an operating panel of an image information processing apparatus increases a risk that information kept in the image information processing apparatus, a server cooperating therewith, and so on leaks or is lost via the mobile information terminal. This is because the mobile information terminal possibly contains, therein, Spyware to externally transfer data, viruses to destroy data, or other factors to cause some troubles, irrespective of whether or not this is intentional.

It is therefore desirable to enhance the usability of image information processing apparatuses by increasing the variety of operation environment thereof, and to reduce a risk of leakage of electronic data indicating image information.

According to the present invention this object is achieved by an image information processing apparatus including an operating panel on which an operating screen is displayed according to claim 1, by an image information processing system comprising an image information processing apparatus including an operating panel on which an operating screen is displayed according to claim 4, and by a non-transitory computer-readable storage medium storing thereon a computer program used in an image information processing apparatus according to claim 6.

These and other characteristics and objects of the present invention will become more apparent by the following descriptions of preferred embodiments with
reference to drawings.

Reference will now be made, by way of example, to the accompanying drawings, in which:
Fig. 1 is a diagram showing an example of the configuration of an image information processing system according to an embodiment of the present invention.
Fig. 2 is a diagram showing an example of the structure of an operating panel of an image information processing apparatus.
Fig. 3 is a diagram showing an example of the configuration of a touchscreen portion of an operating panel.
Fig. 4 is a block diagram showing an example of the hardware configuration of an image information processing apparatus.
Fig. 5 is a diagram showing an example of the functional configuration of the principal part of an image information processing apparatus.
Fig. 6 is a flowchart depicting an example of the flow of operation performed by the principal part of an image information processing apparatus.
Fig. 7 is a flowchart depicting an example of an install process for an authorized product.
Fig. 8 is a diagram showing an example of an operating screen displayed by using a first type application.
Fig. 9 is a diagram showing an example of an operating screen displayed by using a second type application.
Fig. 10 is a diagram showing an example of a process implemented by using a first type application.
Figs. 11A and 11B are diagrams showing examples of a process implemented by using a second type application.

Hereinafter, the present invention will be explained in more detail with reference to embodiments and drawings.

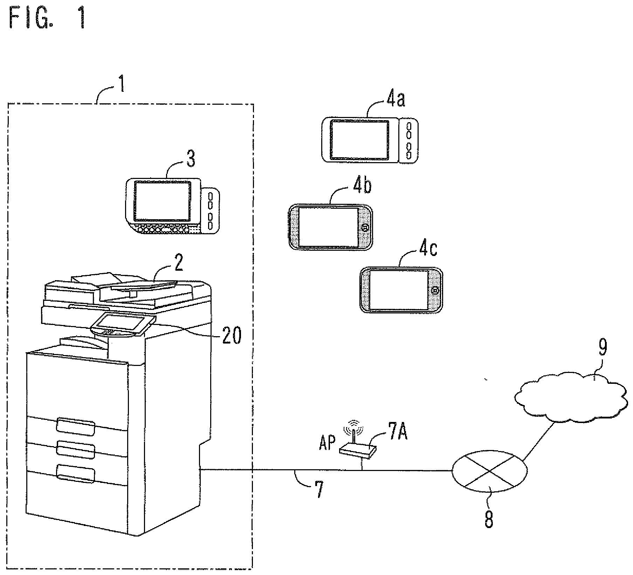

Referring to Fig. 1, an image information processing system 1 according to an embodiment of the present invention is configured of an MFP 2 that is an image information processing apparatus, a mobile information terminal 3 designated as an operational device associated with the MFP 2, and so on. The image information processing system 1 is installed in, for example, an office of business, and shared by a plurality of users. In the office where the image information processing system 1 is installed, a Local Area Network (LAN) 7 is established to interface the MFP 2 with a cloud system 9 via the Internet 8. An access point 7A is connected to the LAN 7. Mobile information terminals 4a, 4b, and 4c, which are possessed by people in the office, and the mobile information terminal 3 can perform wireless LAN communication within a communication distance of the access point 7A.

In the illustrated example, only one mobile information terminal 3 is shown as the operational device associated with the MFP 2. However, a plurality of mobile information terminals may be designated as operational devices associated with the MFP 2. For example, if users of different departments share the MFP 2, the mobile information terminals 3 can be provided on a section-by-section basis. In the meantime, if mobile information terminals 3 are sold by a seller of the MFP 2, all a customer has to do is to purchase the necessary number of mobile information terminals 3, and the customer does not have to work to register the mobile information terminals 3 to the MFP 2 as the operational devices thereof.

In the illustrated example of Fig. 1, three mobile information terminals 4a, 4b, and 4c, which are not designated as operational devices for the MFP 2, are shown. However, the number of mobile information terminals 4a, 4b, and 4c is not limited to three, and any number thereof is possible. The greater the number of mobile information terminals 4a, 4b, 4c, ... is, the larger the operation environment of the MFP 2 is. Even if the number of mobile information terminals 4a, 4b, 4c, ... is zero, the functions of the MFP 2 as the image information processing apparatus are the same as those of the MFP 2 for the case where the number of mobile information 4a, 4b, 4c, ... is one or more.

Each of the mobile information terminal 3 and the mobile information terminals 4a, 4b, and 4c has a display necessary to display an operating screen, which is displayed on an operating panel 20 of the MFP 2, and also has program execution capabilities. The display of each of the mobile information terminal 3 and the mobile information terminals 4a, 4b, and 4c has a resolution equal to or higher than that of the operating panel 20 of the MFP 2. Each of the mobile information terminal 3 and the mobile information terminals 4a, 4b, and 4c is desirably operated by an operating system that has the same or similar functions to those of the operating panel 20 of the MFP 2 to provide compatibility between the subject mobile information terminal and the operating panel 20. Predetermined operation control programs are installed onto the mobile information terminal 3 and the mobile information terminals 4a, 4b, and 4c, so that these terminals can serve as information devices used for operating the MFP 2. The operation control programs and applications, described later, are downloaded from the MFP 2 to each of the mobile information terminal 3 and the mobile information terminals 4a, 4b, and 4c.

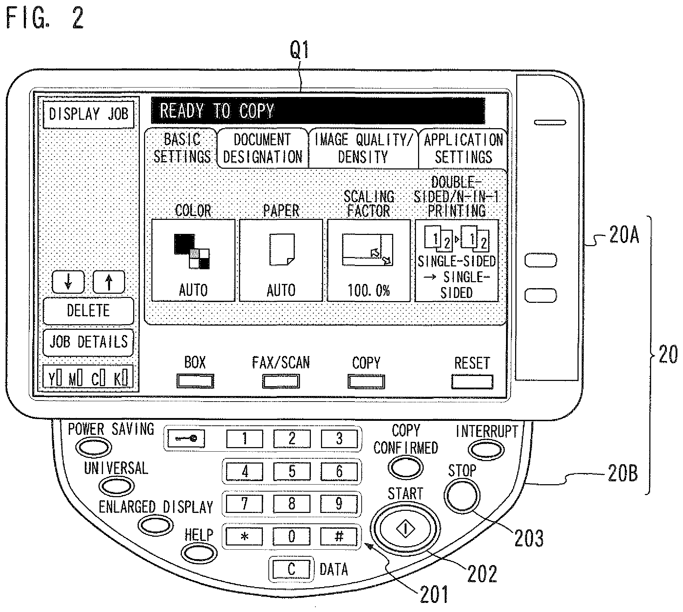

Referring to Fig. 2, the operating panel 20 of the MFP 2 includes a touchscreen portion 20A on which a variety of operating screens are displayed, and a key panel portion 20B in which a variety of fixed keys are disposed. In the illustrated example, the touchscreen portion 20A displays an operating screen Q1 for basic settings for copy process. As the fixed keys in the key panel portion 20B, numeric keys 201 used for entering numerical values, a start key 202 used for causing mechanism portions to start operations, and a stop key 203 used for causing the mechanism portions to stop operations.

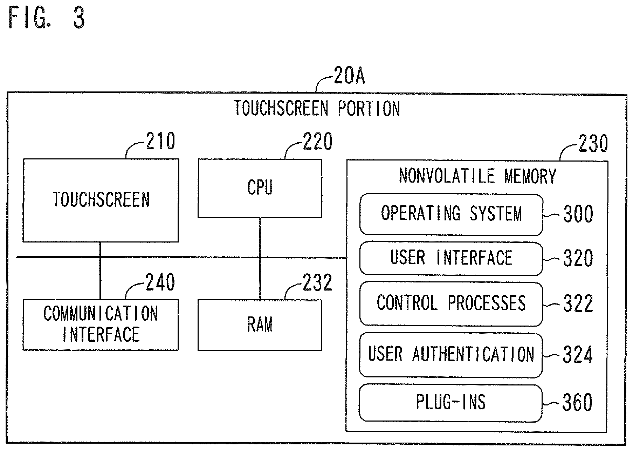

Fig. 3 is a diagram showing an example of the configuration of the touchscreen portion 20A of the operating panel 20. The touchscreen portion 20A is configured of a touchscreen 210 realized by combining a liquid crystal display and a touch-sensitive pointing device, a Central Processing Unit (CPU) 220 that is a processor for executing programs, a nonvolatile memory 230 for storing therein a variety of pieces of software, a Random Access Memory (RAM) 232 used as a work area for program execution, a communication interface 240 for communication with the body of the MFP 2 and an external device.

In the touchscreen portion 20A, Android (registered trademark) is used both as an Operating System (OS) 300 and a User Interface (UI) 320 that is an operation control program for displaying operating screens. Instead of Android, however, it is possible to use Symbian (registered trademark) OS by Nokia Corporation, Windows (registered trademark) Mobile by Microsoft Corporation, or other OS's, and to incorporate a user interface corresponding to the OS in use into the touchscreen portion 20A.

Aside from OS and UI, the nonvolatile memory 230 stores, therein, a program 322 for controlling a variety of processes such as printing or scanning performed by the MFP 2, a program 324 for user authentication, plug-ins 360 for enabling a user to use web services. Such software is loaded onto the RAM 232 if necessary, so that a process specified by a user is implemented.

The plug-ins 360 are used for, for example, electronic mail service, document creation software, map browsing service, calendar service provided by Google. It is also possible to install, onto the touchscreen portion 20A, plug-ins suitable for business support service provided by Microsoft Corporation, or suitable for Software as a Service (SaaS) provided by other businesses.

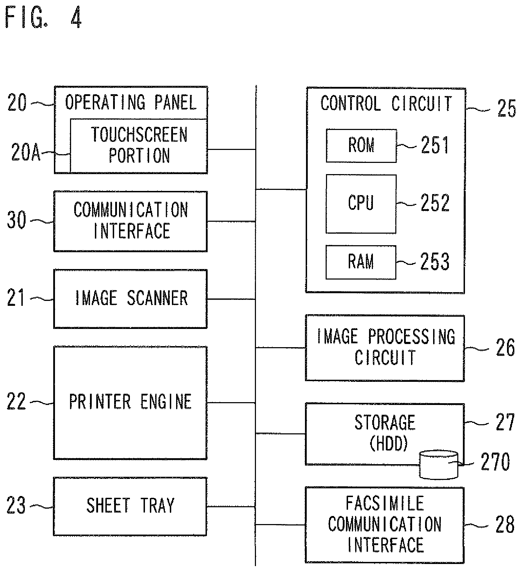

Fig. 4 shows an example of the configuration of the MFP 2 having the touchscreen portion 20A described above. Referring to Fig. 4, the MFP 2 includes an operating panel 20, an image scanner 21, a printer engine 22, a sheet tray (stacker) 23, a control circuit 25, an image processing circuit 26, a storage 27, a facsimile communication interface 28, and a communication interface 30 for network connection. The operating panel 20 is provided with the touchscreen portion 20A described above. The image scanner 21 is capable of optically scanning image information depicted on a document. The printer engine 22 is operable to print a monochrome or color image on a single side or both sides of paper supplied from the multi-stage sheet tray 23. The control circuit 25 is configured of a ROM 251 for storing a control program thereon, a CPU 252 for executing the control program, and a RAM 253 for executing programs. The RAM 253 includes an S-RAM functioning as a work area and an NV-RAM (nonvolatile memory) which stores a variety of settings and is backed up by a battery. The image processing circuit 26 performs a variety of image processing including processing for correcting output data of the image scanner 21 and processing for converting an original image into a bitmap format for printing. The storage 27 is a mass storage device such as a hard disk drive. The storage 27 contains a memory region in which data relating to control of the image forming apparatus 1 is stored, and a memory region 270 in which files of a variety of types of documents are saved, i.e., a so-called box. The facsimile communication interface 28 enables the MFP 2 to perform facsimile communication through a public line. The communication interface 30 enables the MFP 2 to perform communication with the touchscreen portion 20A, the mobile information terminal 3, and the mobile information terminals 4a, 4b, and 4c.

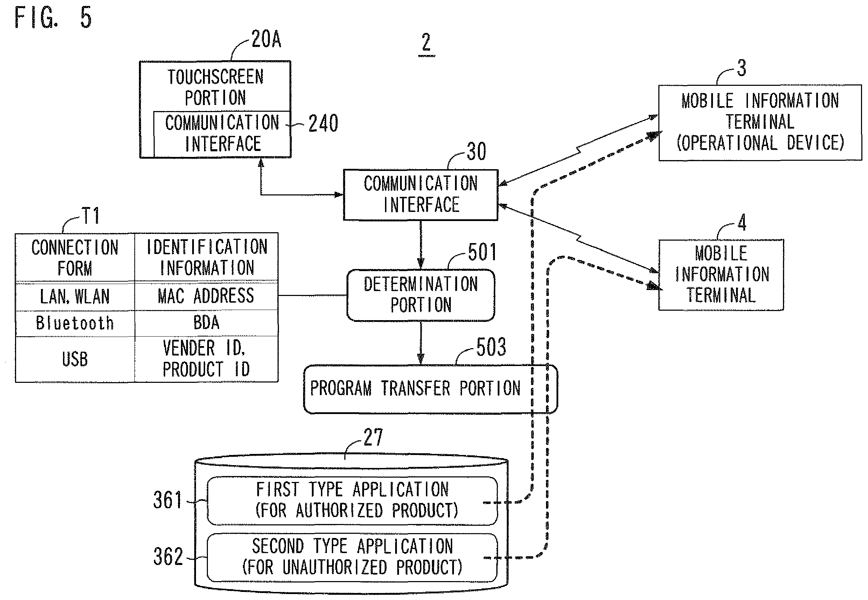

Descriptions are given below of a download of an application from the MFP 2 to the mobile information terminal 3 and the mobile information terminals 4a, 4b, and 4c. In the descriptions, a mobile information terminal 3 qualified as an operational device by a manufacturer of the MFP 2 is referred to as an "authorized product" or an "authorized mobile information terminal 3". Further, mobile information terminals 4a, 4b, and 4c that are not qualified as operational devices are not distinguished from one another. Each of such mobile information terminals 4a, 4b, and 4c is referred to as an "unauthorized product" or an "unauthorized mobile information terminal 4". Based on this rule, elements and parts in Fig. 5 and beyond are given reference signs.

Fig. 5 is a diagram showing an example of the functional configuration of the principal part of the MFP 2, i.e., parts related to a download of an application. Referring to Fig. 5, the MFP 2 is configured of the storage 27 for storing therein applications to be downloaded, a determination portion 501 for determining whether a mobile information terminal is an authorized product or an unauthorized product, and a program transfer portion 503 for downloading a predetermined application onto an authorized product and an unauthorized product. The CPU 252, which is incorporated as a computer to execute programs into the MFP 2, executes control programs, and thereby, functions of the determination portion 501 and the program transfer portion 503 are implemented.

Before or after shipment of an MFP 2 from a factory, a first type application 361 and a second type application 362 are stored into a storage 27 of the MFP 2. Each of the first type application 361 and the second type application 362 implements processing involved with the MFP 2 or a device connected thereto. While processing implemented by the first type application 361 and processing implemented by the second type application 362 are similar to each other, they are not identical. To be specific, the first type application 361 is for an authorized product, and can be used to capture image information from the MFP 2 or a device communicably connected thereto to a mobile information terminal 3 as an authorized product. In contrast, the second type application 362 is for an unauthorized product, and cannot be used to capture image information from the MFP 2 and any other devices to a mobile information terminal 4 as an unauthorized product.

When an authorized mobile information terminal 3 or an unauthorized mobile information terminal 4 is communicably connected to the MFP 2 via the communication interface 30, the determination portion 501 determines whether or not the terminal thus connected is an authorized product based on information registered in a table T1. The table T1 shows identification information for identifying authorized products in connection forms compatible with the communication interface 30. Such identification information is a Media Access Control (MAC) address in connection through a LAN based on IEEE 802.3 (Ethernet, registered trademark), or through a Wireless LAN (WLAN) based on IEEE 802.11a/b/g. Alternatively, such identification information is a Bluetooth Device Address (BDA) in connection through IEEE 802.15.1 (Bluetooth). Yet alternatively, such identification information is a vender ID and a product ID in connection through a Universal Serial Bus (USB). The determination portion 501 compares identification information of a terminal connected to the MFP 2 with identification information shown in the table T1. If a match is found therebetween, then the determination portion 501 determines that the terminal connected to the MFP 2 is an authorized product. Otherwise, the determination portion 501 determines that the terminal connected to the MFP 2 is an unauthorized product.

The program transfer portion 503 downloads, based on the determination made by the determination portion 501, the first type application 361 onto the authorized mobile information terminal 3 communicably connected to the MFP 2, and downloads the second type application 362 onto the unauthorized mobile information terminal 4 communicably connected to the MFP 2.

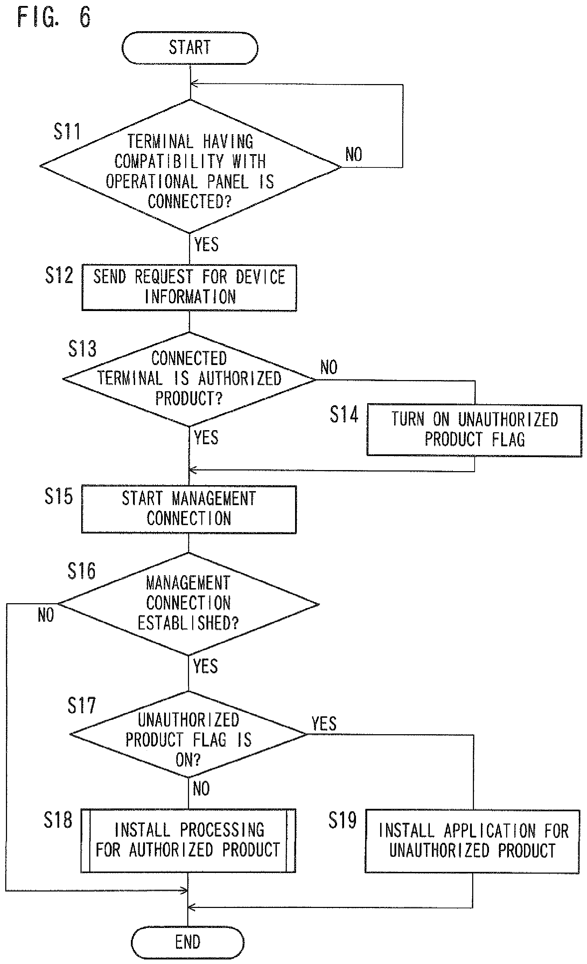

Fig. 6 is a flowchart depicting an example of the flow of operation performed by the determination portion 501 and the program transfer portion 503. When a connection is established between the MFP 2 and the mobile information terminal 3 or the mobile information terminal 4 which has functions compatible with those of the touchscreen portion 20A of the operating panel 20 of the MFP 2, the determination portion 501 obtains identification information of the mobile information terminal connected to the MFP 2 (Step Sll and Step S12). The determination portion 501 compares the identification information thus obtained with the details of the table T1, and then determines whether or not the connected mobile information terminal is an authorized product (Step S13). If it is determined that the connected mobile information terminal is an unauthorized product, then the result of the determination is shown by turning on an unauthorized product flag.

Upon receiving the determination result notification from the determination portion 501, the program transfer portion 503 establishes a management connection necessary to install an application onto the mobile information terminal to which the MFP 2 is performing communication (Step S15). If such a management connection cannot be established (No in Step S16), then the program transfer portion 503 finishes the processing. If such a management connection can be established (Yes in Step S16), then the program transfer portion 503 checks whether or not an unauthorized product flag is turned on (Step S17). Unless an unauthorized product flag is turned on, then the process goes to an install processing routine for authorized product (Step S18). On the other hand, if an unauthorized product flag is turned on (Yes in Step S17), then the program transfer portion 503 downloads the second type application 362 for unauthorized product onto the mobile information terminal connected, for management, to the MFP 2, and also causes the mobile information terminal to install, thereonto, the second type application 362 to make it easy for a user of the mobile information terminal to use the second type application 362 (Step S19).

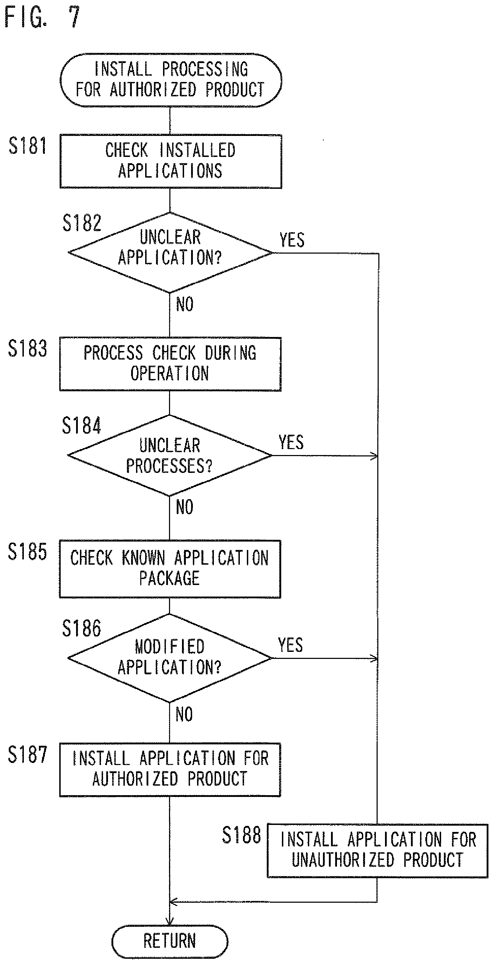

Fig. 7 is a flowchart depicting an example of the flow of the install processing routine (Step S18 of Fig. 6) for authorized product. The install processing routine is included in the main routine in order to cope with a case where undesirable modification in terms of information security is probably made to even an authorized product. During the install processing routine, before downloading the first type application 361 to an authorized product, checks are made to confirm the reliability of the authorized product.

The program transfer portion 503 makes the following checks: (A) a check as to whether or not an unclear application is included in applications already installed on the mobile information terminal connected, for management, to the MFP 2; (B) a check as to whether or not an unclear process is performed in the mobile information terminal connected for management; and (C) a check as to whether or not a modified application is included in known applications already installed on the mobile information terminal connected for management (Steps S181, S183, and S185). The checks may be made in any order. Check (C) described above can be made by using a method for determining hash values of the application.

If the result of check (A) shows that there are no unclear applications (No in Step S182), at the same time, if the result of check (B) shows that there are no unclear processes (No in Step S184), and further, if the result of check (C) indicates that there are no modified applications (No in Step S186), then the program transfer portion 503 downloads the first type application 361 for authorized product, and causes the mobile information terminal connected for management to install thereonto the first type application 361 (Step S187).

On the other hand, if any one of an unclear application, an unclear process, and a modified application is found, then downloading the first type application 361 is stopped. In such a case, the program transfer portion 503 downloads the second type application 362 for unauthorized product, instead of the first type application 361, and causes the mobile information terminal connected for management to install thereonto the second type application 362 (Step S188). In short, even if the determination portion 501 determines that a mobile information terminal is an authorized product, the mobile information terminal is dealt with as an unauthorized product provided that conditions for checks (A)-(C) are not satisfied.

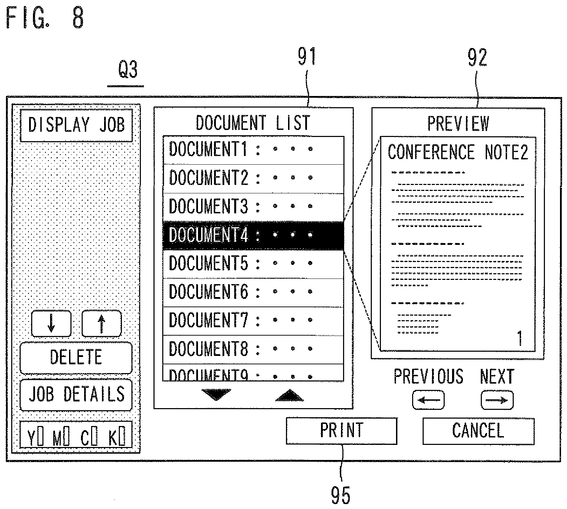

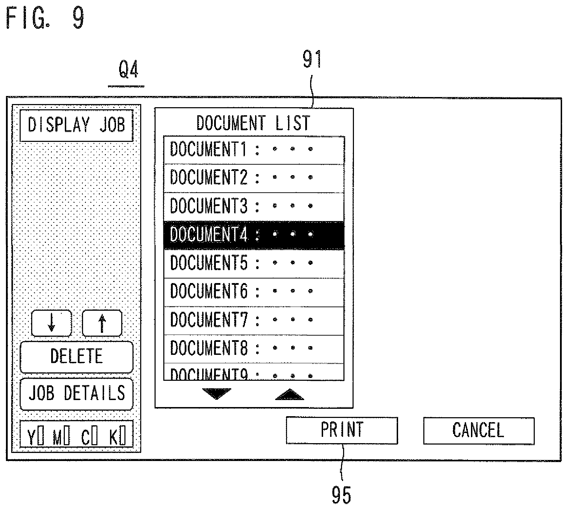

Figs. 8 and 9 show an example of the difference in function between the first type application 361 and the second type application 362.

Fig. 8 shows an example of an operating screen Q3 displayed in an authorized mobile information terminal 3. The operating screen Q3 is displayed when a user of the authorized mobile information terminal 3 intends to, for example, cause the MFP 2 to print a document based on document data saved to the box 270 of the MFP 2 by using the first type application 361. The operating screen Q3 has a document list 91 in which documents corresponding to document data saved to the box 270 are displayed in the form of meta data, e.g., file name, and also has a preview region 92 in which image information of a document selected in the document list 91 is displayed as a thumbnail image.

The user touches a character string indicating any one of documents in the document list 91, so that image information which is the substantial details of the selected document can be viewed beforehand. The user touches another character string in the document list 91, so that a document to be previewed is turned from one document to another document. When the user touches a print button 95 in the operating screen Q3, a document displayed in the preview region 92 at this time point is deemed as a print target. In response to the print button 95 being touched, the indication on the display is changed from the operating screen Q3 to an operating screen (not shown) for print settings. When the user makes desired settings on the set of prints, a printable area, and so on, and then, gives instructions to perform printing, the first type application 361 and the operating system cooperate with each other to give the print instructions to the MFP 2.

In order for the mobile information terminal 3 to preview an image of a document, the mobile information terminal 3 needs to obtain image information of the document from the MFP 2. Irrespective of whether or not the MFP 2 performs a process on image information for preview, the image of the document is not previewed appropriately unless the mobile information terminal 3 obtains image information which helps the user to understand the substantial details of the document. In short, the first type application 361 configured to preview a document image has a function to capture image information from an external device to the mobile information terminal 3 on which the first type application 361 is installed. In the case where the first type application 361 is launched and the operating screen Q3 is displayed, image information is captured from the MFP 2 to the mobile information terminal 3.

Fig. 9 shows an example of an operating screen Q4 displayed in an unauthorized mobile information terminal 4. The operating screen Q4 is displayed when a user of the unauthorized mobile information terminal 4 intends to, for example, cause the MFP 2 to print a document based on document data saved to the box 270 of the MFP 2 by using the second type application 362. The operating screen Q4 has a document list 91 as with the operating screen Q3 described above. Unlike the operating screen Q3, however, the operating screen Q4 has no preview region 92.

The user of the unauthorized mobile information terminal 4 cannot confirm the details of a document in the form of a preview image. He/She can, however, specify a desired document as a print target by referring to information, e.g., file name, displayed in the document list 91. The operation from when the user specifies a document to when a print command is given to the MFP 2 is the same as that in the authorized mobile information terminal 3 discussed above.

Since no preview image is displayed, document image information is unnecessary to display the operating screen Q4. The second type application 362 does not have a function to capture image information from an external device to the mobile information terminal 4 on which the second type application 362 is installed. Accordingly, even when the second type application 362 is launched, image information is not captured from the MFP 2 to the mobile information terminal 4.

As described above, the first type application 361 and the second type application 362 are different from each other in function to capture image information. Stated differently, whether or not an application is equipped with a function to capture image information is a condition based on which the first type application and the second type application are distinguished from each other.

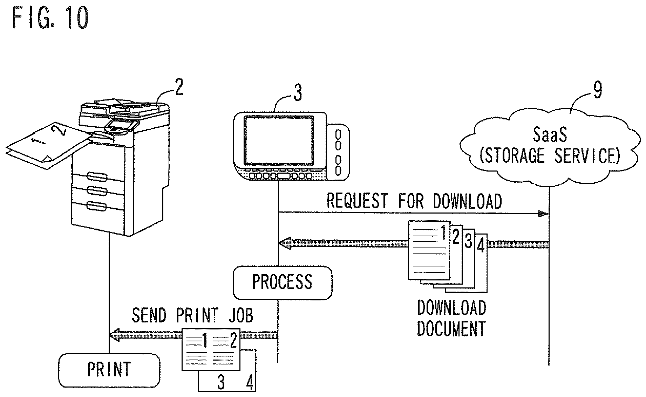

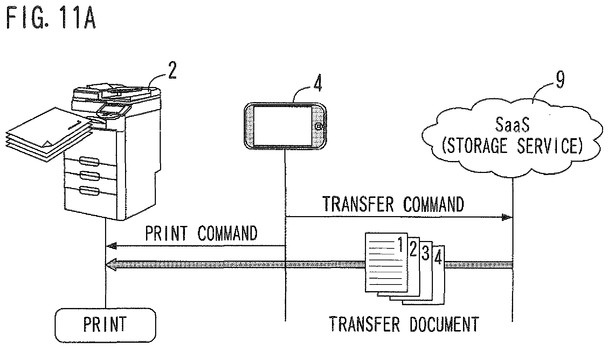

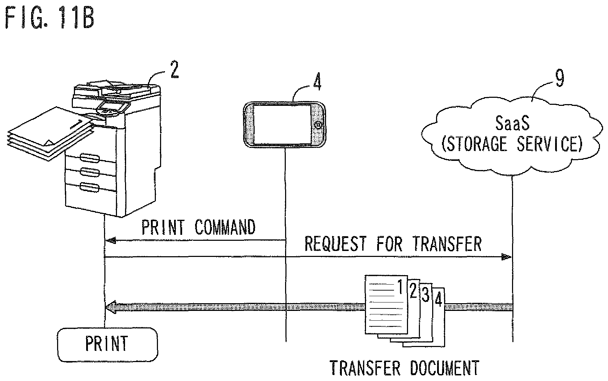

Fig. 10 shows an example of a process implemented by using the first type application 361, and Figs. 11A and 11B show examples of a process implemented by using the second type application 362. The illustrated process is a process for "printing, with the MFP 2, a document saved based on SaaS included in the cloud system 9". Each of the authorized mobile information terminal 3 and the unauthorized mobile information terminal 4 cooperates with the MFP 2 and the cloud system 9 to perform the illustrated process.

Referring to Fig. 10, the authorized mobile information terminal 3 on which the first type application 361 is installed requests the cloud system 9 to download a document specified by a user. Prior to this operation, it is possible for the mobile information terminal 3 to display a list of documents stored in the cloud system 9 and to preview document images so as to make it easy for the user to specify a document, as with the case of Fig. 8. Responding to the download request from the authorized mobile information terminal 3, the cloud system 9 sends a document, or, in other words, a data file containing image information, to the mobile information terminal 3. Since the image information is captured to the authorized mobile information terminal 3, the user thereof can specify a variety of print formats. For example, he/she can specify N-in-1 printing in which document images corresponding to a plurality of pages are printed onto one sheet of paper. When the user specifies such N-in-1 printing in the print setting screen, the authorized mobile information terminal 3 performs data processing to bring images on a plurality of pages into an image for one page, and creates a print job (print command) by combining print setting information with image information for printing obtained as a result of the data processing. The authorized mobile information terminal 3, then, sends the print job created to the MFP 2.

Referring to Fig. 11A, the unauthorized mobile information terminal 4 on which the second type application 362 is installed instructs the cloud system 9 to transfer a document specified by a user to the MFP 2. The unauthorized mobile information terminal 4 also instructs the MFP 2 to perform printing based on the document transferred from the cloud system 9.

Fig. 11B shows a modified example of the process shown in Fig. 11A. Referring to Fig. 11B, the unauthorized mobile information terminal 4 on which the second type application 362 is installed instructs the MFP 2 to obtain a document from the cloud system 9 and to perform printing based on the obtained document. In the illustrated example, the MFP 2 instructed to perform printing requests the cloud system 9 to transfer a document.

In the embodiments discussed above, image information is not captured to an unauthorized mobile information terminal 4 onto which the second type application 362 is downloaded. While the case is described above in which information is transferred from the cloud system 9, let alone, limitations are similarly applied to the case of transfer from the storage 27 of the MFP 2. According to the arrangement described above, even if the storage 27 of the MFP 2 stores, therein, important electronic data in security such as confidential documents, and address book data containing personal information, such important electronic data is not transferred to an unauthorized mobile information terminal 4, and therefore, such important electronic data does not leak out to an unknown external device as-is through the unauthorized mobile information terminal 4.

According to the embodiments discussed above, when the touchscreen portion 20A of the operating panel 20 is unavailable, an authorized mobile information terminal 3 can be used as a substitute for the touchscreen portion 20A. Further, irrespective of whether or not an information device corresponds to the operational device, the first type application or the second type application to access the image information processing apparatus is downloaded onto an information device capable of displaying an operating screen. A user of the information device, therefore, can use the downloaded application to cause the image information processing apparatus to execute a predetermined process.

In the embodiments discussed above, a user of an unauthorized mobile information terminal 4 can acquire an operation environment under which he/she operates the MFP 2 anywhere in a communication distance connectable to the MFP 2. The user can perform operation, at hand, for causing the MFP 2 to perform printing based on data saved to the cloud system 9, to perform facsimile transmission based on the data, to transfer the data to a personal computer connected to the LAN 7, to store the data into the box 270, and so on.

In the embodiments described above, processes implemented by using the first type application 361 and the second type application 362 are not limited to processes involved with the MFP 2. A process is discussed which transfers a file from the cloud system 9 connected to the LAN 7 to a file server (not shown) and vice versa. The process does not involve capturing a file to an authorized mobile information terminal and an unauthorized mobile information terminal. Therefore, each of the first type application 361 and the second type application 362 can implement the process. Further, a process is discussed which modifies and edits data of documents, calendar, address book, etc., saved to the cloud system 9. This process involves capturing a data file. Therefore, the second type application 362 cannot implement the process while the first type application 361 can implement.

In the foregoing embodiments, an information device onto which the first type application 361 and the second type application 362 are downloaded to be used as an operation means is not necessarily a mobile device. However, the use of a mobile device realizes an operation environment where a user uses the MFP 2 by operating his/her own familiar mobile information terminal around the location of the MFP 2.

In the foregoing embodiments, an MFP 2 is taken as an example of an image information processing apparatus; however, the present invention is not limited thereto. The present invention is applicable to a printer, a facsimile device, a document server, a storage, a scanner, and other types of image information processing apparatus.

While example embodiments of the present invention have been shown and described, it will be understood that the present invention is not limited thereto, and that various changes and modifications may be made by those skilled in the art without departing from the scope of the invention as set forth in the appended claims and their equivalents, as interpreted by the description and drawings.

## Claims

1. An image information processing apparatus (2) including an operating panel (20) on which an operating screen (Q1) is displayed, the image information processing apparatus (2) comprising:
a storage (27) configured to store, therein, a first type application (361) and a second type application (362),
the first type application (361) implementing, when being executed by an information device (3, 4, 4a, 4b, 4c) capable of displaying the operating screen (Q1), a process that includes accessing a cloud system (9) communicably connected to the image information processing apparatus (2), and capturing image information from the cloud system (9) thus accessed, and
the second type application (362) implementing, when being executed by the information device (3, 4, 4a, 4b, 4c), a process that includes accessing the cloud system (9) directly or indirectly via the image information processing apparatus (2), and transfers capturing image information from the cloud system (9) thus accessed to the image information processing apparatus (2) with excluding the capturing image information from the information device (3, 4, 4a, 4b, 4c);
a determination portion (501) configured to determine, when the information device (3, 4, 4a, 4b, 4c) is communicably connected to the image information processing apparatus (2), whether or not the information device (3, 4, 4a, 4b, 4c) corresponds to an authorized operational device; and
a program transfer portion (503) configured to download the first type application (361) onto the information device (3, 4, 4a, 4b, 4c) when the determination portion (501) determines that the information device (3, 4, 4a, 4b, 4c) corresponds to the authorized operational device, and to download the second type application (362) onto the information device (3, 4, 4a, 4b, 4c) when the determination portion (501) determines that the information device (3, 4, 4a, 4b, 4c) does not correspond to the authorized operational device.

2. The image information processing apparatus (2) according to claim 1, wherein
the program transfer portion (503) determines, before downloading the first type application (361), whether or not an application already stored in the information device (3, 4, 4a, 4b, 4c) determined to correspond to the authorized operational device is an unclear application, and stops downloading the first type application (361) if the program transfer portion (503) determines that the application is an unclear application.

3. The image information processing apparatus (2) according to claim 1 or 2, wherein
the operating panel (20) includes a communication interface (240), a display (210), an operating system (300) for controlling the communication interface (240) and the display (210), an operation control program (322) for displaying the operating screen (Q1) on the display (210) in cooperation with the operating system (300), a communication terminal application (360) for obtaining image information through network communication, and a processor (220) for executing the operation control program (322) and the communication terminal application (360).

4. An image information processing system (1) comprising an image information processing apparatus (2) including an operating panel (20) on which an operating screen (Q1) is displayed, wherein
the image information processing apparatus (2) includes a storage (27) configured to store, therein, a first type application (361) and a second type application (362), the first type application (361) implementing, when being executed by an information device (3, 4, 4a, 4b, 4c) capable of displaying the operating screen (Q1), a process that includes accessing a cloud system (9) communicably connected to the image information processing apparatus (2), and capturing image information from the cloud system (9) thus accessed, and the second type application (362) implementing, when being executed by the information device (3, 4, 4a, 4b, 4c), a process that includes accessing the cloud system(9) directly or indirectly via the image information processing apparatus (2), and transfers capturing image information from the cloud system (9) thus accessed to the image information processing apparatus (2) with excluding the capturing image information from the information device (3, 4, 4a, 4b, 4c),
a determination portion (501) configured to determine, when the information device (3, 4, 4a, 4b, 4c) is communicably connected to the image information processing apparatus (2), whether or not the information device (3, 4, 4a, 4b, 4c) corresponds to an authorized device, and
a program transfer portion (503) configured to download the first type application (361) onto the information device (3, 4, 4a, 4b, 4c) when the determination portion (501) determines that the information device (3, 4, 4a, 4b, 4c) corresponds to the authorized operational device, and to download the second type application (362) onto the information device (3, 4, 4a, 4b, 4c) when the determination portion (501) determines that the information device (3, 4, 4a, 4b, 4c) does not correspond to the authorized operational device, wherein
the operating panel (20) includes a communication interface (240), a display (210), an operating system (300) for controlling the communication interface (240) and the display (210), an operation control program (322) for displaying the operating screen (Q1) on the display (210) in cooperation with the operating system (300), a communication terminal application (360) for obtaining image information through network communication, and a processor (220) for executing the operation control program (322) and the communication terminal application (360), and
an information device (3) configured to be used to operate the image information processing apparatus (2) under a state where the operation control program (322) and an operating system are installed on the information device (3), the operating system having a function equal or equivalent to a function of the operating system (300) of the operating panel (20) in the image information processing apparatus (2).

5. The image information processing system (1) according to claim 4, wherein the program transfer portion (503) is configured to determine, before downloading the first type application (361), whether or not an application already stored in the information device (3, 4, 4a, 4b, 4c) determined to correspond to the authorized operational device is an unclear application, and to stop downloading the first type application (361) if the program transfer portion (503) determines that the application is not an unclear application.

6. A non-transitory computer-readable storage medium (230) storing thereon a computer program (322) used in an image information processing apparatus (2) including an operating panel on which an operating screen is displayed,
when executed by a computer (220) of the image information processing apparatus (2), the computer program (322) causing the computer (220) to implement:
a determination portion (501) configured to determine, when an information device (3, 4, 4a, 4b, 4c) capable of displaying the operating screen (Q1) is communicably connected to the image information processing apparatus (2), whether or not the information device (3, 4, 4a, 4b, 4c) corresponds to an authorized operational device; and
a program transfer portion (503) configured to download a first type application (361) onto the information device (3, 4, 4a, 4b, 4c) when the determination portion (501) determines that the information device (3, 4, 4a, 4b, 4c) corresponds to the authorized operational device, and to download a second type application (362) onto the information device (3, 4, 4a, 4b, 4c) when the determination portion (501) determines that the information device (3, 4, 4a, 4b, 4c) does not correspond to the authorized operational device, the first type application (361) implementing a process that includes accessing a cloud system (9) communicably connected to the image information processing apparatus (2), and capturing image information from the cloud system (9) thus accessed, and the second type application (362) implementing a process that includes accessing the cloud system (9) directly or indirectly via the image information processing apparatus (2), and transfers capturing image information from the cloud system (9) thus accessed to the image information processing apparatus (2) with excluding the capturing image information from the information device (3, 4, 4a, 4b, 4c).

7. The non-transitory computer-readable storage medium (230) according to claim 6, wherein
the computer program (322) causes the program transfer portion (503) to determine, before downloading the first type application (361), whether or not an application stored in the information device (3) determined to correspond to the authorized operational device is an unclear application, and to stop downloading the first type application (361) if the program transfer portion (503) determines that the application is an unclear application.

## Patentansprüche

1. Bildinformationsverarbeitungseinrichtung (2) einschließlich eines Bedienfeldes (20), auf dem ein Bedienbildschirm (Q1) angezeigt ist, wobei die Bildinformationsverarbeitungseinrichtung (2) umfasst:
einen Speicher (27), der konfiguriert ist, um darin eine Anwendung eines ersten Typs (361) und eine Anwendung eines zweiten Typs (362) zu speichern,
wobei die Anwendung des ersten Typs (361) einen Prozess implementiert, der ein Aufrufen eines Cloudsystems (9), das kommunikativ mit der Bildinformationsverarbeitungseinrichtung (2) verbunden ist, und ein Erfassen von Bildinformationen aus dem dadurch aufgerufenen Cloudsystem (9) einschließt, wenn sie durch eine Informationsvorrichtung (3, 4, 4a, 4b, 4c) ausgeführt wird, die imstande ist, den Bedienbildschirm (Q1) anzuzeigen, und
wobei die Anwendung des zweiten Typs (362) einen Prozess implementiert, der ein direktes oder indirektes Aufrufen des Cloudsystems (9) über die Bildinformationsverarbeitungseinrichtung (2) einschließt, und ein Erfassen von Bildinformationen aus dem dadurch aufgerufenen Cloudsystem (9) auf die Bildinformationsverarbeitungseinrichtung (2) überträgt unter Ausschluss des Erfassens von Bildinformationen aus der Informationsvorrichtung (3, 4, 4a, 4b, 4c), wenn sie durch die Informationsvorrichtung (3, 4, 4a, 4b, 4c) ausgeführt wird;
einen Bestimmungsabschnitt (501), der konfiguriert ist, um zu bestimmen, ob die Informationsvorrichtung (3, 4, 4a, 4b, 4c) einer autorisierten Betriebsvorrichtung entspricht oder nicht, wenn die Informationsvorrichtung (3, 4, 4a, 4b, 4c) kommunikativ mit der Bildinformationsverarbeitungseinrichtung (2) verbunden ist; und
einen Programmübertragungsabschnitt (503), der konfiguriert ist, um die Anwendung des ersten Typs (361) auf die Informationsvorrichtung (3, 4, 4a, 4b, 4c) herunterzuladen, wenn der Bestimmungsabschnitt (501) bestimmt, dass die Informationsvorrichtung (3, 4, 4a, 4b, 4c) der autorisierten Betriebsvorrichtung entspricht, und um die Anwendung des zweiten Typs (362) auf die Informationsvorrichtung (3, 4, 4a, 4b, 4c) herunterzuladen, wenn der Bestimmungsabschnitt (501) bestimmt, dass die Informationsvorrichtung (3, 4, 4a, 4b, 4c) der autorisierten Betriebsvorrichtung nicht entspricht.

2. Bildinformationsverarbeitungseinrichtung (2) nach Anspruch 1, wobei
der Programmübertragungsabschnitt (503) vor dem Herunterladen der Anwendung des ersten Typs (361) bestimmt, ob eine Anwendung, die bereits in der Informationsvorrichtung (3, 4, 4a, 4b, 4c), die bestimmt ist, um der autorisierten Betriebsvorrichtung zu entsprechen, gespeichert ist, eine unklare Anwendung ist oder nicht, und das Herunterladen der Anwendung des ersten Typs (361) anhält, wenn der Programmübertragungsabschnitt (503) bestimmt, dass die Anwendung eine unklare Anwendung ist.

3. Bildinformationsverarbeitungseinrichtung (2) nach Anspruch 1 oder 2, wobei
das Bedienfeld (20) eine Kommunikationsschnittstelle (240), eine Anzeige (210), ein Bediensystem (300) zum Steuern der Kommunikationsschnittstelle (240) und der Anzeige (210), ein Betriebssteuerungsprogramm (322) zum Anzeigen des Bedienbildschirms (Q1) auf der Anzeige (210) in Zusammenarbeit mit dem Bediensystem (300), eine Kommunikationsendgerätanwendung (360) zum Erhalten von Bildinformationen durch Netzwerkkommunikation, und einen Prozessor (220) zum Ausführen des Betriebssteuerungsprogramms (322) und der Kommunikationsendgerätanwendung (360) einschließt.

4. Bildinformationsverarbeitungssystem (1), umfassend eine Bildinformationsverarbeitungseinrichtung (2) einschließlich eines Bedienfeldes (20), auf dem ein Bedienbildschirm (Q1) angezeigt ist, wobei
die Bildinformationsverarbeitungseinrichtung (2) einen Speicher (27) einschließt, der konfiguriert ist, um darin eine Anwendung eines ersten Typs (361) und eine Anwendung eines zweiten Typs (362) zu speichern, wobei die Anwendung des ersten Typs (361) einen Prozess implementiert, der ein Aufrufen eines Cloudsystems (9), das kommunikativ mit der Bildinformationsverarbeitungseinrichtung (2) verbunden ist, und ein Erfassen von Bildinformationen aus dem dadurch aufgerufenen Cloudsystem (9) einschließt, wenn sie durch eine Informationsvorrichtung (3, 4, 4a, 4b, 4c) ausgeführt wird, die imstande ist, den Bedienbildschirm (Q1) anzuzeigen, und wobei die Anwendung des zweiten Typs (362) einen Prozess implementiert, der ein direktes oder indirektes Aufrufen des Cloudsystems (9) über die Bildinformationsverarbeitungseinrichtung (2) einschließt, und ein Erfassen von Bildinformationen aus dem dadurch aufgerufenen Cloudsystem (9) auf die Bildinformationsverarbeitungseinrichtung (2) überträgt unter Ausschluss des Erfassens von Bildinformationen aus der Informationsvorrichtung (3, 4, 4a, 4b, 4c), wenn sie durch die Informationsvorrichtung (3, 4, 4a, 4b, 4c) ausgeführt wird,
einen Bestimmungsabschnitt (501), der konfiguriert ist, um zu bestimmen, ob die Informationsvorrichtung (3, 4, 4a, 4b, 4c) einer autorisierten Vorrichtung entspricht oder nicht, wenn die Informationsvorrichtung (3, 4, 4a, 4b, 4c) kommunikativ mit der Bildinformationsverarbeitungseinrichtung (2) verbunden ist, und
einen Programmübertragungsabschnitt (503), der konfiguriert ist, um die Anwendung des ersten Typs (361) auf die Informationsvorrichtung (3, 4, 4a, 4b, 4c) herunterzuladen, wenn der Bestimmungsabschnitt (501) bestimmt, dass die Informationsvorrichtung (3, 4, 4a, 4b, 4c) der autorisierten Betriebsvorrichtung entspricht, und um die Anwendung des zweiten Typs (362) auf die Informationsvorrichtung (3, 4, 4a, 4b, 4c) herunterzuladen, wenn der Bestimmungsabschnitt (501) bestimmt, dass die Informationsvorrichtung (3, 4, 4a, 4b, 4c) der autorisierten Betriebsvorrichtung nicht entspricht, wobei
das Bedienfeld (20) eine Kommunikationsschnittstelle (240), eine Anzeige (210), ein Bediensystem (300) zum Steuern der Kommunikationsschnittstelle (240) und der Anzeige (210), ein Betriebssteuerungsprogramm (322) zum Anzeigen des Bedienbildschirms (Q1) auf der Anzeige (210) in Zusammenarbeit mit dem Bediensystem (300), eine Kommunikationsendgerätanwendung (360) zum Erhalten von Bildinformationen durch Netzwerkkommunikation, und einen Prozessor (220) zum Ausführen des Betriebssteuerungsprogramms (322) und der Kommunikationsendgerätanwendung (360) einschließt, und
eine Informationsvorrichtung (3), die konfiguriert ist, um zum Bedienen der Bildinformationsverarbeitungseinrichtung (2) in einem Zustand verwendet zu werden, in dem das Betriebssteuerungsprogramm (322) und ein Bediensystem auf der Informationsvorrichtung (3) installiert sind, wobei das Bediensystem eine Funktion aufweist, die gleich oder äquivalent zu einer Funktion des Bediensystems (300) des Bedienfeldes (20) in der Bildinformationsverarbeitungseinrichtung (2) ist.

5. Bildinformationsverarbeitungssystem (1) nach Anspruch 4, wobei der Programmübertragungsabschnitt (503) konfiguriert ist, um vor dem Herunterladen der Anwendung des ersten Typs (361) zu bestimmen, ob eine Anwendung, die bereits in der Informationsvorrichtung (3, 4, 4a, 4b, 4c), die bestimmt ist, um der autorisierten Betriebsvorrichtung zu entsprechen, gespeichert ist, eine unklare Anwendung ist oder nicht, und um das Herunterladen der Anwendung des ersten Typs (361) anzuhalten, wenn der Programmübertragungsabschnitt (503) bestimmt, dass die Anwendung eine unklare Anwendung ist.

6. Nicht-transitorisches computerlesbares Speichermedium (230), das ein Computerprogramm (322) darauf speichert, das in einer Bildinformationsverarbeitungseinrichtung (2) verwendet wird, die ein Bedienfeld einschließt, auf dem ein Bedienbildschirm angezeigt ist, wenn es durch einen Computer (220) der Bildinformationsverarbeitungseinrichtung (2) ausgeführt wird, wobei das Computerprogramm (322) den Computer (220) dazu veranlasst, zu implementieren:
einen Bestimmungsabschnitt (501), der konfiguriert ist, um zu bestimmen, ob die Informationsvorrichtung (3, 4, 4a, 4b, 4c) einer autorisierten Betriebsvorrichtung entspricht oder nicht, wenn eine Informationsvorrichtung (3, 4, 4a, 4b, 4c), die imstande ist, den Bedienbildschirm (Q1) anzuzeigen, kommunikativ mit der Bildinformationsverarbeitungseinrichtung (2) verbunden ist; und
einen Programmübertragungsabschnitt (503), der konfiguriert ist, um eine Anwendung eines ersten Typs (361) auf die Informationsvorrichtung (3, 4, 4a, 4b, 4c) herunterzuladen, wenn der Bestimmungsabschnitt (501) bestimmt, dass die Informationsvorrichtung (3, 4, 4a, 4b, 4c) der autorisierten Betriebsvorrichtung entspricht, und um eine Anwendung eines zweiten Typs (362) auf die Informationsvorrichtung (3, 4, 4a, 4b, 4c) herunterzuladen, wenn der Bestimmungsabschnitt (501) bestimmt, dass die Informationsvorrichtung (3, 4, 4a, 4b, 4c) der autorisierten Betriebsvorrichtung nicht entspricht, wobei die Anwendung des ersten Typs (361) einen Prozess implementiert, der ein Aufrufen eines Cloudsystems (9), das kommunikativ mit der Bildinformationsverarbeitungseinrichtung (2) verbunden ist, und ein Erfassen von Bildinformationen aus dem dadurch aufgerufenen Cloudsystem (9) einschließt, und wobei die Anwendung des zweiten Typs (362) einen Prozess implementiert, der ein direktes oder indirektes Aufrufen des Cloudsystems (9) über die Bildinformationsverarbeitungseinrichtung (2) einschließt, und ein Erfassen von Bildinformationen aus dem dadurch aufgerufenen Cloudsystem (9) auf die Bildinformationsverarbeitungseinrichtung (2) überträgt unter Ausschluss des Erfassens von Bildinformationen aus der Informationsvorrichtung (3, 4, 4a, 4b, 4c).

7. Nicht-transitorisches computerlesbares Speichermedium (230) nach Anspruch 6, wobei
das Computerprogramm (322) den Programmübertragungsabschnitt (503) dazu veranlasst, vor dem Herunterladen der Anwendung des ersten Typs (361) zu bestimmen, ob eine Anwendung, die in der Informationsvorrichtung (3), die bestimmt ist, um der autorisierten Betriebsvorrichtung zu entsprechen, gespeichert ist, eine unklare Anwendung ist oder nicht, und das Herunterladen der Anwendung des ersten Typs (361) anzuhalten, wenn der Programmübertragungsabschnitt (503) bestimmt, dass die Anwendung eine unklare Anwendung ist.

## Revendications

1. Appareil de traitement d'informations d'image (2) comprenant un panneau d'exploitation (20) sur lequel est affiché un écran opératoire (Q1), l'appareil de traitement d'informations d'image (2) comprenant :
une mémoire (27) configurée pour y stocker une application du premier type (361) et une application du second type (362),
l'application du premier type (361) mettant en oeuvre, lorsqu'elle est exécutée par un dispositif d'information (3, 4, 4a, 4b, 4c) capable d'afficher l'écran opératoire (Q1), un procédé qui comprend l'accès à un système de cloud (9) raccordé en communication avec l'appareil de traitement d'informations d'image (2) et la capture d'informations d'image venant du système de cloud (9) auquel il a été accédé, et
l'application du second type (362) mettant en oeuvre, lorsqu'elle est exécutée par le dispositif d'information (3, 4, 4a, 4b, 4c), un procédé qui comprend l'accès au système de cloud (9) directement ou indirectement via l'appareil de traitement d'informations d'image (2) et transfère la capture d'informations d'image du système de cloud (9) auquel il a été ainsi accédé à l'appareil de traitement d'informations d'image (2) à l'exclusion de la capture d'informations d'image à partir du dispositif d'information (3, 4, 4a, 4b, 4c) ;
une partie de détermination (501) configurée pour déterminer, lorsque le dispositif d'information (3, 4, 4a, 4b, 4c) est raccordé en communication avec l'appareil de traitement d'informations d'image (2), si le dispositif d'information (3, 4, 4a, 4b, 4c) correspond ou non à un dispositif opérationnel autorisé ; et
une partie de transfert de programme (503) configurée pour télécharger l'application du premier type (361) sur le dispositif d'information (3, 4, 4a, 4b, 4c) lorsque la partie de détermination (501) détermine que le dispositif d'information (3, 4, 4a, 4b, 4c) correspond au dispositif opérationnel autorisé et télécharger l'application du second type (362) sur le dispositif d'information (3, 4, 4a, 4b, 4c) lorsque la partie de détermination (501) détermine que le dispositif d'information (3, 4, 4a, 4b, 4c) ne correspond pas au dispositif opérationnel autorisé.

2. Appareil de traitement d'informations d'image (2) selon la revendication 1, dans lequel :
la partie de transfert de programme (503) détermine, avant téléchargement de l'application du premier type (361), si une application déjà stockée dans le dispositif d'information (3, 4, 4a, 4b, 4c) déterminée pour correspondre au dispositif opérationnel autorisé est ou non une application qui manque de clarté et arrête le téléchargement de l'application du premier type (361) si la partie de transfert de programme (503) détermine que l'application est une application qui manque de clarté.

3. Appareil de traitement d'informations d'image (2) selon la revendication 1 ou 2, dans lequel :
le panneau d'exploitation (20) comprend une interface de communication (240), un appareil d'affichage (210), un système d'exploitation (300) pour commander l'interface de communication (240) et l'appareil d'affichage (210), un programme de commande de fonctionnement (322) pour afficher l'écran opératoire (Q1) sur l'appareil d'affichage (210) en coopération avec le système d'exploitation (300), une application de terminal de communication (360) pour obtenir des informations d'image par communication de réseau et un processeur (220) pour exécuter le programme de commande de fonctionnement (322) et l'application de terminal de communication (360).

4. Système de traitement d'informations d'image (1) comprenant un appareil de traitement d'informations d'image (2) comportant un panneau d'exploitation (20) sur lequel un écran opératoire (Q1) est affiché, dans lequel :
l'appareil de traitement d'informations d'image (2) comprenant une mémoire (27) configurée pour y stocker une application du premier type (361) et une application du second type (362), l'application du premier type (361) mettant en oeuvre, lorsqu'elle est exécutée par un dispositif d'information (3, 4, 4a, 4b, 4c) capable d'afficher l'écran opératoire (Q1), un procédé qui comprend un accès à un système de cloud (9) raccordé en communication avec l'appareil de traitement d'informations d'image (2) et la capture d'informations d'image du système de cloud (9) auquel il est donc accédé et l'application du second type (362) mettant en oeuvre, lorsqu'elle est exécutée par le dispositif d'information (3, 4, 4a, 4b, 4c), un procédé qui comprend l'accès au système de cloud (9) directement ou indirectement via l'appareil de traitement d'informations d'image (2) et transfère la capture d'informations d'image du système de cloud (9) auquel il est ainsi accédé à l'appareil de traitement d'informations d'image (2) à l'exclusion de la capture des informations d'image du dispositif d'information (3, 4, 4a, 4b, 4c),
une partie de détermination (501) configurée pour déterminer, lorsque le dispositif d'information (3, 4, 4a, 4b, 4c) est raccordé en communication avec l'appareil de traitement d'informations d'image (2), si le dispositif d'information (3, 4, 4a, 4b, 4c) correspond ou non à un dispositif autorisé ; et
une partie de transfert de programme (503) configurée pour télécharger l'application du premier type (361) sur le dispositif d'information (3, 4, 4a, 4b, 4c) lorsque la partie de détermination (501) détermine que le dispositif d'information (3, 4, 4a, 4b, 4c) correspond au dispositif opérationnel autorisé et télécharger l'application du second type (362) sur le dispositif d'information (3, 4, 4a, 4b, 4c) lorsque la partie de détermination (501) détermine que le dispositif d'information (3, 4, 4a, 4b, 4c) ne correspond pas au dispositif opérationnel autorisé, dans lequel
le panneau d'exploitation (20) comprend une interface de communication (240), un appareil d'affichage (210), un système d'exploitation (300) pour commander l'interface de communication (240) et l'appareil d'affichage (210), un programme de commande de fonctionnement (322) pour afficher l'écran opératoire (Q1) sur l'appareil d'affichage (210) en coopération avec le système d'exploitation (300), une application de terminal de communication (360) pour obtenir des informations d'image par communication de réseau et un processeur (220) pour exécuter le programme de commande de fonctionnement (322) et l'application de terminal de communication (360), et
un dispositif d'information (3) configuré pour être utilisé pour faire fonctionner l'appareil de traitement d'informations d'image (2) dans un état où le programme de commande de fonctionnement (322) et un système d'exploitation sont installés sur le dispositif d'information (3), le système d'exploitation ayant une fonction égale ou équivalente à une fonction du système d'exploitation (300) du panneau d'exploitation (20) dans l'appareil de traitement d'informations d'image (2).

5. Système de traitement d'informations d'image (1) selon la revendication 4, dans lequel la partie de transfert de programme (503) est configurée pour déterminer, avant le téléchargement de l'application du premier type (361) si une application déjà stockée dans le dispositif d'information (3, 4, 4a, 4b, 4c) déterminée pour correspondre au dispositif opérationnel autorisé est ou non une application qui manque de clarté et pour arrêter le téléchargement de l'application du premier type (361) si la partie de transfert de programme (503) détermine que l'application est une application qui manque de clarté.

6. Support de stockage non transitoire lisible par ordinateur (230) stockant un programme informatique (322) utilisé dans un appareil de traitement d'informations d'image (2) comprenant un panneau d'exploitation sur lequel un écran opératoire est affiché,
lorsqu'il est exécuté par un ordinateur (220) de l'appareil de traitement d'informations d'image (2), le programme informatique (322) amène l'ordinateur (220) à mettre en oeuvre :
une partie de détermination (501) configurée pour déterminer, lorsqu'un dispositif d'information (3, 4, 4a, 4b, 4c) capable d'afficher l'écran opératoire (Q1) est raccordé en communication avec l'appareil de traitement d'informations d'image (2), si le dispositif d'information (3, 4, 4a, 4b, 4c) correspond ou non à un dispositif opérationnel autorisé ; et
une partie de transfert de programme (503) configurée pour télécharger une application du premier type (361) sur le dispositif d'information (3, 4, 4a, 4b, 4c) lorsque la partie de détermination (501) détermine que le dispositif d'information (3, 4, 4a, 4b, 4c) correspond au dispositif opérationnel autorisé, et télécharger une application du second type (362) sur le dispositif d'information (3, 4, 4a, 4b, 4c) lorsque la partie de détermination (501) détermine que le dispositif d'information (3, 4, 4a, 4b, 4c) ne correspond pas au dispositif opérationnel autorisé, l'application du premier type (361) mettant en oeuvre un procédé qui comprend l'accès à un système de cloud (9) raccordé en communication avec l'appareil de traitement d'informations d'image (2) et la capture d'informations d'image du système de cloud (9) auquel il est ainsi accédé, et l'application du second type (362) mettant en oeuvre un procédé qui comprend l'accès au système de cloud (9) directement ou indirectement via l'appareil de traitement d'informations d'image (2) et transfère la capture d'informations d'image du système de cloud (9) auquel il est ainsi accédé à l'appareil de traitement d'informations d'image (2) à l'exclusion de la capture d'informations d'image à partir du dispositif d'information (3, 4, 4a, 4b, 4c).

7. Support de stockage non transitoire lisible par ordinateur (230) selon la revendication 6, dans lequel :
le programme informatique (322) amène la partie de transfert de programme (503) à déterminer, avant téléchargement de l'application du premier type (361), si une application stockée dans le dispositif d'information (3) déterminée pour correspondre au dispositif opérationnel autorisé est ou non une application qui manque de clarté et arrêter le téléchargement de l'application du premier type (361) si la partie de transfert de programme (503) détermine que l'application est une application qui manque de clarté.
